# EUROPEAN PATENT APPLICATION

(11) **EP 4 431 466 A1**
(43) Date of publication of application: **18.09.2024**
(21) Application number: 22892356.1
(22) Date of filing: 09.08.2022
(51) Int. Cl.: C02F 3/04

(54) **WATER SPRINKLING FILTER BED APPARATUS**

(30) Priority: 11.11.2021 JP 2021184100
(71) Applicant: Metawater Co., Ltd., Tokyo 101-0041 (JP)
(72) Inventor: TABATA, Masao, Tokyo 101-0041 (JP)
(74) Representative: FDST Patentanwälte
(86) International application number: PCT/JP2022/030406
(87) International publication number: WO 2023/084853

(57) **Abstract**

A sprinkling filter apparatus includes: a tank which is filled with a carrier performing a biological treatment with respect to a liquid to be treated; a first sprinkling pipe which is fixed to the tank and which sprinkles the liquid to be treated to the tank; a supply apparatus which supplies the liquid to be treated to the first sprinkling pipe; and a control apparatus which controls the supply of the liquid to be treated from the supply apparatus to the first sprinkling pipe.

## Description

### TECHNICAL FIELD

The present invention relates to a sprinkling filter apparatus.

### BACKGROUND ART

A sprinkling filter method is known as an example of a method of biological removal of organic pollutants. The sprinkling filter method is a method of sprinkling a liquid to be treated onto a carrier such as natural stone, resin, or the like which is deposited with and which holds microorganisms and causing the microorganisms deposited on and held by the carrier to decompose and remove organic pollutants contained in the liquid to be treated (see Patent Literature 1).

### CITATION LIST

### PATENT LITERATURE

Patent Literature 1: Japanese Patent Application Publication No. 2003-071478

### SUMMARY OF INVENTION

### PROBLEMS TO BE SOLVED BY THE INVENTION

In the sprinkling filter method such as that described above, generally, a sprinkler arm (hereinafter, also referred to as a rotating sprinkler arm) which rotates by a reaction force during sprinkling is used. However, when sprinkling the liquid to be treated by using such a rotating sprinkler arm, problems such as a filter portion assuming a circular shape and being subjected to an installation constraint in terms of shape, an occurrence of a rotational failure of the sprinkler arm attributable to rusting, and the like occur.

### MEANS FOR SOLVING THE PROBLEMS

According to an aspect of the embodiments, a sprinkling filter apparatus includes: a tank which is filled with a carrier performing a biological treatment with respect to a liquid to be treated; a first sprinkling pipe which is fixed to the tank and which sprinkles the liquid to be treated to the tank; a supply apparatus which supplies the liquid to be treated to the first sprinkling pipe; and a control apparatus which controls the supply of the liquid to be treated from the supply apparatus to the first sprinkling pipe.

### ADVANTAGEOUS EFFECTS OF THE INVENTION

According to an aspect, problems that arise when sprinkling a liquid to be treated by using a rotating sprinkler arm can be solved.

### BRIEF DESCRIPTION OF DRAWINGS

Fig. 1 is a configuration diagram of the sprinkling filter system 100 according to the first embodiment.
Fig. 2 is a top view of a carrier 11 and a sprinkling pipe 13.
Figs. 3 to 8 are diagrams describing sprinkling control by the control apparatus 30.
Fig. 9 is a configuration diagram of the sprinkling filter system 200 according to the second embodiment.
Figs. 10 and 11 are top views of the carrier 11 and the sprinkling pipe 13.
Figs. 12 to 14 are diagrams describing sprinkling control by the control apparatus 30.

### DESCRIPTION OF EMBODIMENTS

### [Sprinkling filter system 100 according to first implementation]

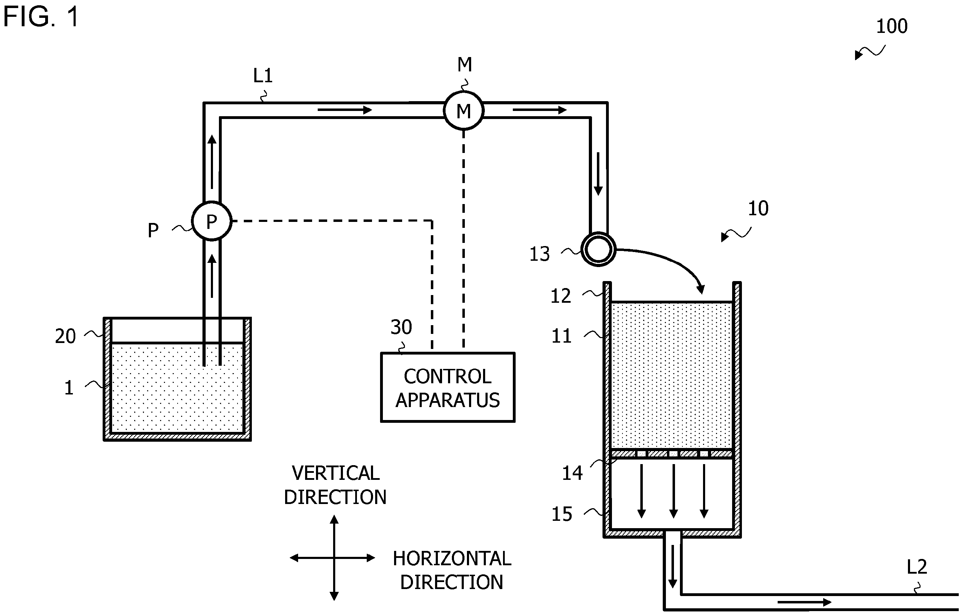

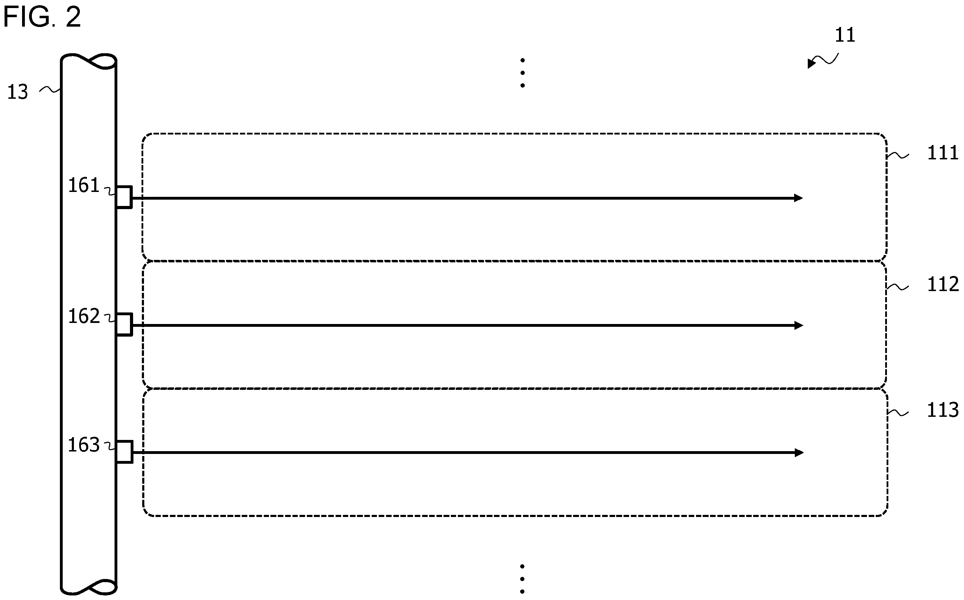

First, a configuration example of a sprinkling filter system 100 according to a first embodiment will be described. Fig. 1 is a configuration diagram of the sprinkling filter system 100 according to the first embodiment. In addition, Fig. 2 is a top view of a carrier 11 and a sprinkling pipe 13.

As shown in Fig. 1, for example, the sprinkling filter system 100 includes a sprinkling filter apparatus 10 which removes organic pollutants (not illustrated) contained in a liquid to be treated 1 such as sewage by a biological treatment and a storage tank 20 which temporarily stores the liquid to be treated 1 to be supplied to the sprinkling filter apparatus 10.

As shown in Fig. 1, for example, the sprinkling filter apparatus 10 includes the carrier 11 which is deposited with and which holds microorganisms (not illustrated), a filling tank 12 which is filled with the carrier 11, the sprinkling pipe 13 (hereinafter, also referred to as a first sprinkling pipe 13) which sprinkles the liquid to be treated 1 on the carrier 11, and a support member 14 which supports, from below, the carrier 11 filling the filling tank 12. Note that the carrier 11 is, for example, natural stone, resin, or the like.

Specifically, the liquid to be treated 1 which is stored in the storage tank 20 is supplied to the sprinkling pipe 13 via, for example, a line L1 which couples the storage tank 20 and the sprinkling filter apparatus 10 to each other by a supply apparatus P such as a pump provided in the line L1. A line is also referred to as piping.

In addition, the sprinkling pipe 13 sprinkles the liquid to be treated 1 in such a manner that, for example, an ejection direction equals a horizontal direction. In other words, for example, the sprinkling pipe 13 is fixed with respect to the filling tank 12 and does not move in the horizontal direction. Therefore, as shown in Fig. 2, the ejection direction of the liquid to be treated 1 in the sprinkling pipe 13 (the ejection direction due to a sprinkler hole 16 provided in the sprinkling pipe 13) is fixed in such a manner that, for example, the liquid to be treated 1 is ejected in one direction in the horizontal direction.

In addition, for example, the sprinkling pipe 13 is provided with a plurality of sprinkler holes 16 along a longitudinal direction of the sprinkling pipe 13.

Specifically, as shown in Fig. 2, for example, the sprinkling pipe 13 is provided with a plurality of sprinkler holes 16 including a sprinkler hole 161, a sprinkler hole 162, and a sprinkler hole 163. In addition, as indicated by a solid arrow in Fig. 2, for example, each of the sprinkler hole 161, the sprinkler hole 162, and the sprinkler hole 163 performs sprinkling of the liquid to be treated 1 on each of a region 111, a region 112, and a region 113 which are filled with the carrier 11 (each of the region 111, the region 112, and the region 113 which are lined up in the longitudinal direction of the sprinkling pipe 13).

In other words, for example, when a length of a width of a region filled with the carrier 11 (a length of a width of the filling tank 12) is longer than a length of a width of a region that is a sprinkling object due to each sprinkler hole 16 (a length in a longitudinal direction of the sprinkling pipe 13), sprinkling cannot be performed on all of the regions filled with the carrier 11 by sprinkling of the liquid to be treated 1 through one sprinkler hole 16. In consideration thereof, in order to sprinkle all regions, for example, the sprinkling pipe 13 is provided with the plurality of sprinkler holes 16 along the longitudinal direction of the sprinkling pipe 13.

Further specifically, positions of the sprinkler holes 16 in the sprinkling pipe 13 are determined in such a manner that, for example, a region where sprinkling of the liquid to be treated 1 is not performed is not created between regions that are sprinkling objects due to two adjacent sprinkler holes 16. In addition, the positions of the sprinkler holes 16 in the sprinkling pipe 13 are determined in such a manner that, for example, the regions that are sprinkling objects due to two adjacent sprinkler holes 16 overlap with each other as little as possible.

Accordingly, for example, the sprinkling filter apparatus 10 can sprinkle the liquid to be treated 1 on each region that is a sprinkling object even when the length of the width of a region filled with the carrier 11 is longer than the length of the width of a region that is a sprinkling object due to each sprinkler hole 16.

For example, when sprinkling with respect to all regions that are sprinkling objects can be performed using only one sprinkler hole 16, the sprinkling pipe 13 may be provided with only one sprinkler hole 16. In addition, the sprinkling pipe 13 may eject the liquid to be treated 1 in a direction tilted by a predetermined angle from the horizontal direction toward a vertically upward direction. Furthermore, adjustment means which tilts the sprinkling pipe 13 by a predetermined angle may be provided. The adjustment means is equipped with an angle adjustment function of tilting the sprinkling pipe 13 by an angle desired by a designer or a user of the sprinkling filter apparatus 10.

Let us now return to Fig. 1. The organic pollutants contained in the liquid to be treated 1 sprinkled on the carrier 11 is decomposed and removed by microorganisms deposited on the carrier 11 during a process in which the liquid to be treated 1 passes through the carrier 11. For example, the liquid to be treated 1 after decomposition and removal of the organic pollutants have been performed is supplied to a storage tank 15 via a plurality of holes provided in the support member 14 and subsequently discharged via a line L2 to the outside (for example, a facility where a next step is to be performed). While a case where the filling tank 12 and the storage tank 15 are integrated with each other will be hereinafter described, alternatively, the filling tank 12 and the storage tank 15 may be separately provided.

In other words, in the sprinkling filter apparatus 10 according to the present embodiment, the sprinkling pipe 13 of which an ejection direction of the liquid to be treated 1 is fixed is used in place of a rotating sprinkler arm.

With a sprinkling filter apparatus using a rotating sprinkler arm (a conventional sprinkling filter apparatus), since an effective filter (a region of the carrier 11 to be sprinkled with the liquid to be treated 1) has a circular shape, there may be cases where a constraint occurs with respect to installation locations or cases where efficient installation cannot be achieved.

In addition, with a sprinkling filter apparatus using a rotating sprinkler arm, a rotational failure of the sprinkler arm may occur due to rusting or the like attributable to a septic malodorous gas, a high-humidity atmosphere, or the like created by the liquid to be treated 1.

Furthermore, with a sprinkling filter apparatus using a rotating sprinkler arm, an equal amount of water to be treated is sprinkled from each of the plurality of sprinkler holes provided in the sprinkling pipe. Therefore, in such a sprinkling filter apparatus, spacing between sprinkler holes must be differentiated (in other words, sprinkling widths must be differentiated) in order to perform uniform sprinkling on a circular sprinkling filter and a plurality of sprinkling pipes with mutually different sprinkler hole spacing must be prepared. As described above, a sprinkling filter apparatus using a rotating sprinkler arm has a variety of problems.

By comparison, with the sprinkling filter apparatus 10 according to the present embodiment, using the sprinkling pipe 13 of which an ejection direction of the liquid to be treated 1 is fixed in place of a rotating sprinkler arm enables, for example, the sprinkling filter apparatus 10 to be made a rectangular apparatus. Therefore, with the sprinkling filter apparatus 10, an occurrence of a constraint with respect to installation locations can be suppressed and, at the same time, efficient installations can be achieved. Specifically, for example, the sprinkling filter apparatus 10 can be made a rectangular apparatus by mounting the sprinkling filter apparatus 10 inside a container.

In addition, with the sprinkling filter apparatus 10, using the sprinkling pipe 13 of which an ejection direction of the liquid to be treated 1 is fixed in place of a rotating sprinkler arm enables, for example, an occurrence of a rotational failure attributable to rusting or the like to be suppressed and eliminates the need to prepare a plurality of sprinkling pipes with mutually different sprinkler hole spacing.

Next, sprinkling control will be described. For example, the sprinkling filter system 100 includes a control apparatus 30 which controls sprinkling by the sprinkling pipe 13. For example, the control apparatus 30 is a computer including a processor such as a CPU (Central Computing Unit) and a memory. Hereinafter, sprinkling control by the control apparatus 30 will be described.

### [Sprinkling control by control apparatus 30]

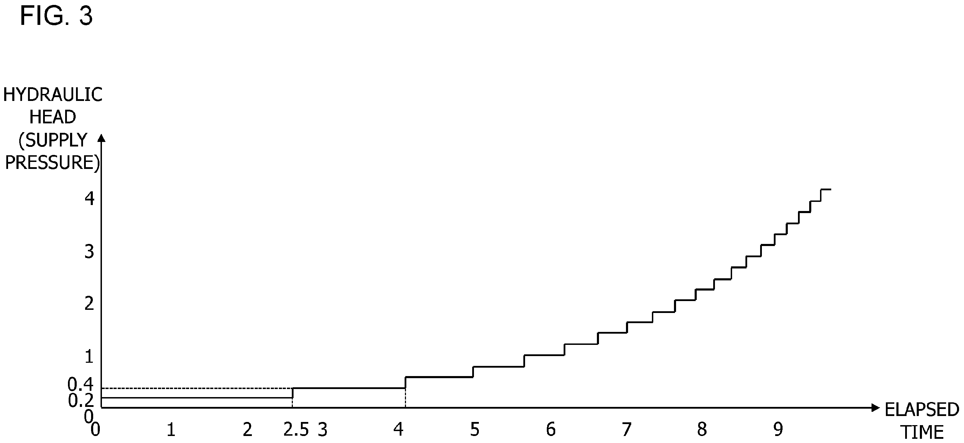

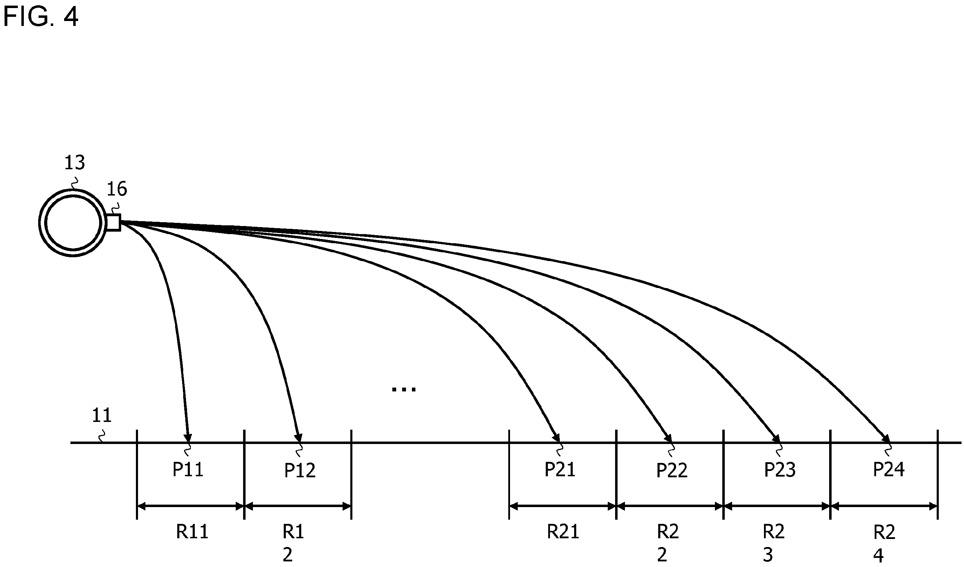

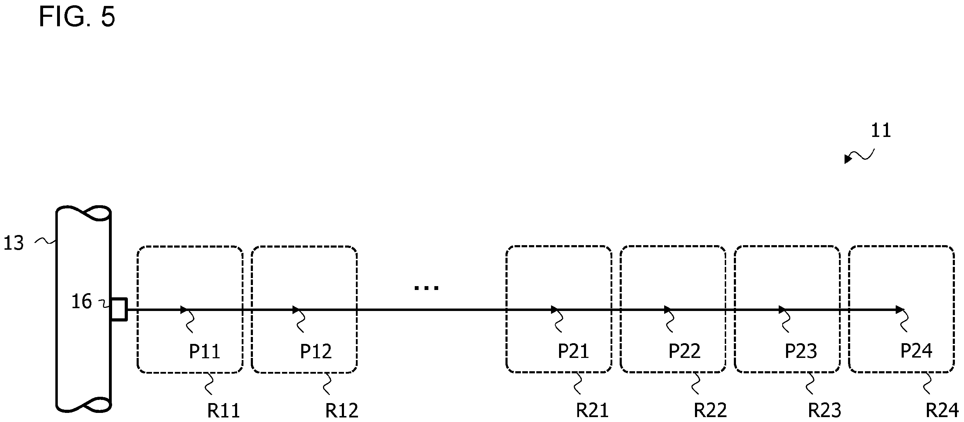

Figs. 3 to 5 are diagrams describing sprinkling control by the control apparatus 30. Specifically, Fig. 3 is a graph showing a relationship between time elapsed from start of sprinkling by the sprinkling pipe 13 (hereinafter, also referred to as elapsed time) and supply pressure of the liquid to be treated 1 which is supplied by the supply apparatus P with respect to the sprinkling pipe 13 (hereinafter, also referred to as supply pressure, hydraulic head, or discharge pressure). An axis of abscissa and an axis of ordinate in the graph shown in Fig. 3 or the like respectively represent an elapsed time and supply pressure. Note that the elapsed time shown in Fig. 3 is made dimensionless and represents a ratio instead of an absolute value. In addition, Fig. 4 is a vertical sectional view showing the carrier 11 and the sprinkling pipe 13 during sprinkling. Furthermore, Fig. 5 is a top view (plan view) showing the carrier 11 and the sprinkling pipe 13 during sprinkling. Figs. 4 and 5 schematically show a state where sprinkling is being performed from one sprinkler hole 16 among the sprinkler holes provided in the sprinkling pipe 13.

The following description will be given on the assumption that the graph shown in Fig. 3 has been defined in advance by a designer, a manager, or the like (hereinafter, also referred to as a manager) of the sprinkling filter system 100. The following description will also be given on the assumption that a time during which the supply apparatus P supplies the liquid to be treated 1 with respect to the sprinkling pipe 13 (hereinafter, also referred to as a supply time) and a time during which the sprinkling pipe 13 sprinkles the liquid to be treated 1 to a region that is a sprinkling object (hereinafter, also referred to as a sprinkling time) are equal to each other. The following description will also be given on the assumption that a supply amount of the liquid to be treated 1 which is supplied by the supply apparatus P with respect to the sprinkling pipe 13 and a sprinkling amount of the liquid to be treated 1 which is sprinkled by the sprinkling pipe 13 to a region that is a sprinkling object (hereinafter, also simply referred to as a sprinkling amount) are equal to each other. Furthermore, the following description will also be given on the assumption that supply pressure of the liquid to be treated 1 which is supplied by the supply apparatus P with respect to the sprinkling pipe 13 and sprinkling pressure of the liquid to be treated 1 which is sprinkled by the sprinkling pipe 13 to a region that is a sprinkling object (hereinafter, also simply referred to as sprinkling pressure) correspond to each other.

In the sprinkling filter apparatus 10 shown in Fig. 1, the sprinkling pipe 13 preferably performs sprinkling of the liquid to be treated 1 on all regions which are sprinkling objects (in other words, a horizontal direction in the filling tank 12) as uniformly as possible in such a manner that decomposition and removal of the organic pollutants contained in the liquid to be treated 1 can be performed as uniformly as possible in all regions which are sprinkling objects.

When a region of which a distance (hereinafter, also referred to as a sprinkling distance) from the sprinkler holes 16 of the liquid to be treated 1 provided in the sprinkling pipe 13 is long is adopted as a region that is a sprinkling object, since the liquid to be treated 1 needs to reach the region that is a sprinkling object, the supply pressure of the liquid to be treated 1 from the supply apparatus P with respect to the sprinkling pipe 13 must be set higher than the supply pressure of the liquid to be treated 1 in a case where a region with a short sprinkling distance is adopted as the region that is a sprinkling object.

Therefore, for example, the control apparatus 30 refers to a nonvolatile memory (not illustrated) storing the graph shown in Fig. 3 and exercises control in such a manner that the longer the sprinkling distance of a region, the higher the supply pressure of the liquid to be treated 1 from the supply apparatus P with respect to the sprinkling pipe 13. For example, the nonvolatile memory may be an HDD (Hard Disk Drive), an SSD (Solid State Drive), or the like.

Specifically, for example, when sprinkling of the liquid to be treated 1 on a first region of which the sprinkling distance is a predetermined distance is controlled in such a manner that the supply pressure of the liquid to be treated 1 from the supply apparatus P with respect to the sprinkling pipe 13 is first supply pressure and the supply time of the liquid to be treated 1 from the supply apparatus P with respect to the sprinkling pipe 13 is a first time, the control apparatus 30 controls sprinkling of the liquid to be treated 1 on a second region of which the sprinkling distance is longer than that of the first region in such a manner that the supply pressure of the liquid to be treated 1 from the supply apparatus P with respect to the sprinkling pipe 13 is second supply pressure which is higher than the first supply pressure and the supply time of the liquid to be treated 1 from the supply apparatus P with respect to the sprinkling pipe 13 is a second time which is shorter than the first time.

Accordingly, the sprinkling filter apparatus 10 can uniformize sprinkling of the liquid to be treated 1 on each region that is a sprinkling object.

Further specifically, for example, by changing the supply pressure of the liquid to be treated 1 which is supplied from the supply apparatus P to the sprinkling pipe 13 with the passage of time, the control apparatus 30 sequentially performs sprinkling on a plurality of regions (for example, a plurality of mutually adjacent regions) which are sprinkling objects. Hereinafter, a specific example of sprinkling control by the control apparatus 30 will be described.

### [Specific example of sprinkling control by control apparatus 30]

Next, a specific example of sprinkling control from the sprinkling pipe 13 (sprinkling control by the control apparatus 30) will be described. Hereinafter, as shown in Figs. 4 and 5, a case where each of a region R11, a region R12, ..., a region R21, a region R22, a region R23, and a region R24 which are mutually adjacent regions are included in regions that are sprinkling objects will be described. In addition, as shown in Figs. 4 and 5, a case where sprinkling distances corresponding to the region R11, the region R12, ..., the region R21, the region R22, the region R23, and the region R24 are longer in this order will be described.

First, for example, a manager calculates supply pressure required to cause the liquid to be treated 1 to reach each of the region R11, the region R12, ..., the region R21, the region R22, the region R23, and the region R24. Next, the manager calculates a supply time required to sprinkle a predetermined amount of the liquid to be treated 1 with respect to each region when sprinkling of the liquid to be treated 1 is performed at the supply pressure corresponding to each region. The predetermined amount of the liquid to be treated 1 is, for example, an amount of the liquid to be treated 1 determined in advance by the manager. Note that the supply time corresponding to each region may be calculated by, for example, dividing the predetermined amount by the supply pressure corresponding to each region.

In addition, for example, the manager generates the graph shown in Fig. 3 so as to correspond to each of the supply pressure and the supply time calculated with respect to the region R11, the region R12, ..., the region R21, the region R22, the region R23, and the region R24.

In the graph shown in Fig. 3, for example, a period of the "elapsed time" from "0" to "2.5" represents a supply time corresponding to the region R11 (in other words, a region that is sprinkled first) and a period of the "elapsed time" from "2.5" to "4" represents a supply time corresponding to the region R12 (in other words, a region that is sprinkled second). In addition, in the graph shown in Fig. 3, for example, "0.2 (mH)" which is the "supply pressure" corresponding to the period of the "elapsed time" from "0" to "2.5" represents supply pressure corresponding to the region R11 and "0.4 (mH)" which is the "supply pressure" corresponding to the period of the "elapsed time" from "2.5" to "4" represents supply pressure corresponding to the region R12.

Subsequently, for example, the control apparatus 30 refers to the graph shown in Fig. 3 and sequentially performs sprinkling of the liquid to be treated 1 on each of the region R11, the region R12, ..., the region R21, the region R22, the region R23, and the region R24. Specifically, for example, the control apparatus 30 sequentially performs sprinkling of the liquid to be treated 1 on each of a point P11 included in the region R11, a point P12 included in the region R12, ..., a point P21 included in the region R21, a point P22 included in the region R22, a point P23 included in the region R23, and a point P24 included in the region R24.

Accordingly, for example, the control apparatus 30 can uniformly perform sprinkling of the liquid to be treated 1 on all regions.

In addition, for example, when sprinkling with respect to the region R24 is completed, for example, the control apparatus 30 repetitively performs sprinkling with respect to each region. Specifically, for example, the control apparatus 30 repetitively performs control of performing sprinkling in the order of the region R11, the region R12, ..., the region R21, the region R22, the region R23, and the region R24. Alternatively, for example, the control apparatus 30 repetitively performs control of performing sprinkling in the order of the region R11, the region R12, ..., the region R21, the region R22, the region R23, and the region R24 and subsequently performing sprinkling in an order (reverse order) of the region R24, the region R23, the region R22, the region R21, ..., the region R12, and the region R11.

For example, the control apparatus 30 may perform control of the supply apparatus P by referring to a value indicated by a manometer M (refer to Fig. 1) such as a pressure transmitter provided on the line L1. In addition, for example, the control apparatus 30 may control the supply pressure of the liquid to be treated 1 from the supply apparatus P with respect to the sprinkling pipe 13 so that the manometer M indicates that the supply pressure of the liquid to be treated 1 from the supply apparatus P with respect to the sprinkling pipe 13 is the supply pressure corresponding to the graph shown in Fig. 3.

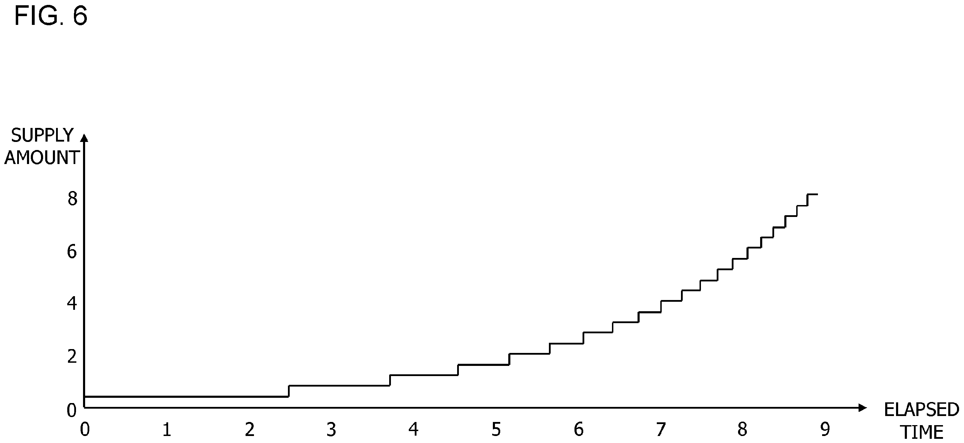

Alternatively, for example, the control apparatus 30 may perform control of the supply apparatus P by using a value (supply amount) indicated by a flow meter (not illustrated) provided on the line L1. In addition, for example, the control apparatus 30 may control a supply amount per unit time of the liquid to be treated 1 from the supply apparatus P with respect to the sprinkling pipe 13 so that the flow meter indicates that the supply amount per unit time of the liquid to be treated 1 from the supply apparatus P with respect to the sprinkling pipe 13 is the supply amount corresponding to a graph shown in Fig. 6.

An axis of abscissa and an axis of ordinate in the graph shown in Fig. 6 respectively represent an elapsed time and a supply amount. Note that the elapsed time shown in Fig. 6 is made dimensionless and represents a ratio instead of an absolute value.

Specifically, for example, when sprinkling of the liquid to be treated 1 on a first region of which the sprinkling distance is a predetermined distance is controlled in such a manner that the supply amount per unit time of the liquid to be treated 1 from the supply apparatus P with respect to the sprinkling pipe 13 is a first supply amount and the supply time of the liquid to be treated 1 from the supply apparatus P with respect to the sprinkling pipe 13 is a first time, the control apparatus 30 may control sprinkling of the liquid to be treated 1 on a second region of which the sprinkling distance is longer than that of the first region in such a manner that the supply amount per unit time of the liquid to be treated 1 from the supply apparatus P with respect to the sprinkling pipe 13 is a second supply amount which is larger than the first supply amount and the supply time of the liquid to be treated 1 from the supply apparatus P with respect to the sprinkling pipe 13 is a second time which is shorter than the first time.

Accordingly, the control apparatus 30 can uniformize sprinkling of the liquid to be treated 1 on each region that is a sprinkling object in a similar manner to a case of controlling supply pressure of the liquid to be treated 1 from the supply apparatus P with respect to the sprinkling pipe 13.

In addition, for example, the control apparatus 30 may be capable of adjusting the number of regions that are sprinkling objects (a size of each region that is a sprinkling object). Furthermore, for example, the control apparatus 30 may perform sprinkling control of sprinkling the liquid to be treated 1 while changing the supply pressure as continuously as possible instead of sprinkling control of sprinkling the liquid to be treated 1 which changing the supply pressure in stages for each region that is a sprinkling object. In other words, the control apparatus 30 may realize sprinkling control of performing sprinkling while changing the supply pressure as continuously as possible by, for example, increasing the number of regions that are sprinkling objects within a controllable range and subsequently changing the supply pressure in stages for each region that is a sprinkling object.

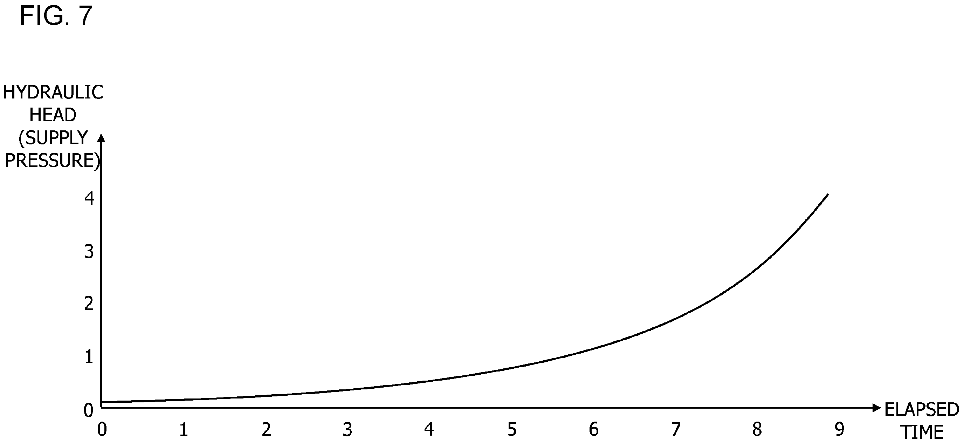

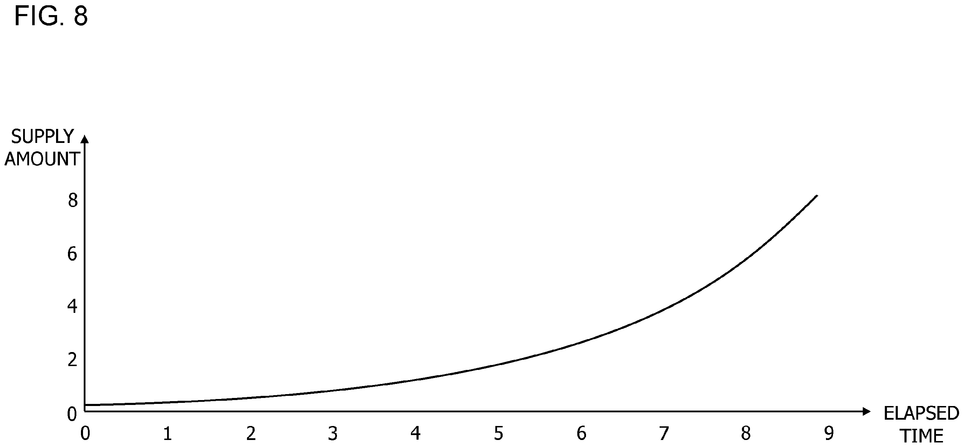

Specifically, in this case, for example, the control apparatus 30 may perform sprinkling control by referring to a graph shown in Fig. 7 or 8 instead of the graphs shown in Figs. 3 and 6. Fig. 7 is a graph showing a formula calculated by approximating each point shown in Fig. 3, and Fig. 8 is a graph showing a formula calculated by approximating each point shown in Fig. 6.

Accordingly, the control apparatus 30 can perform control in such a manner that a change in the supply pressure of the liquid to be treated 1 from the supply apparatus P with respect to the sprinkling pipe 13 becomes smooth and can exercise sprinkling control with higher accuracy.

### [Sprinkling filter system 200 according to second implementation]

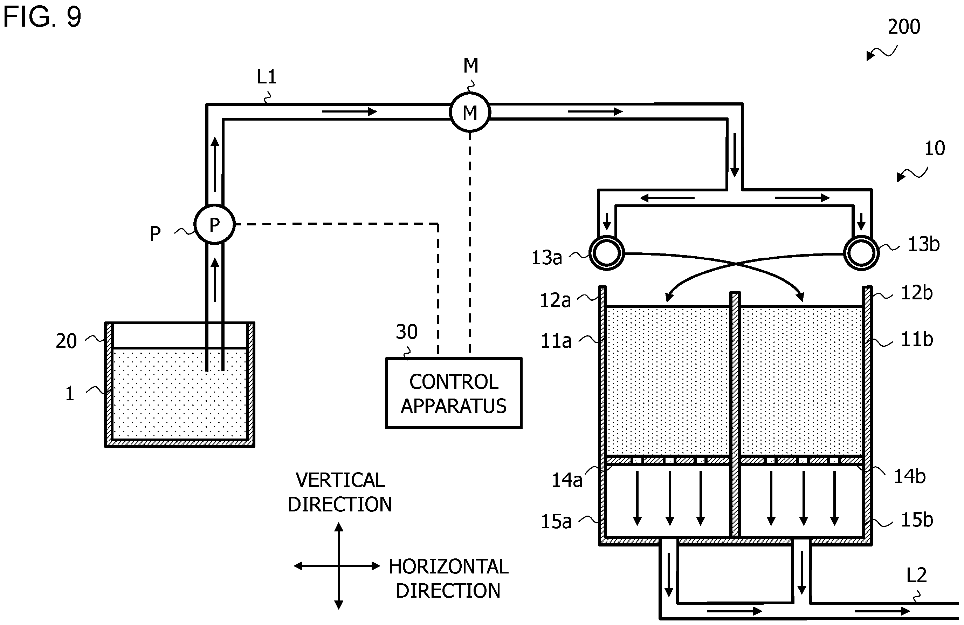

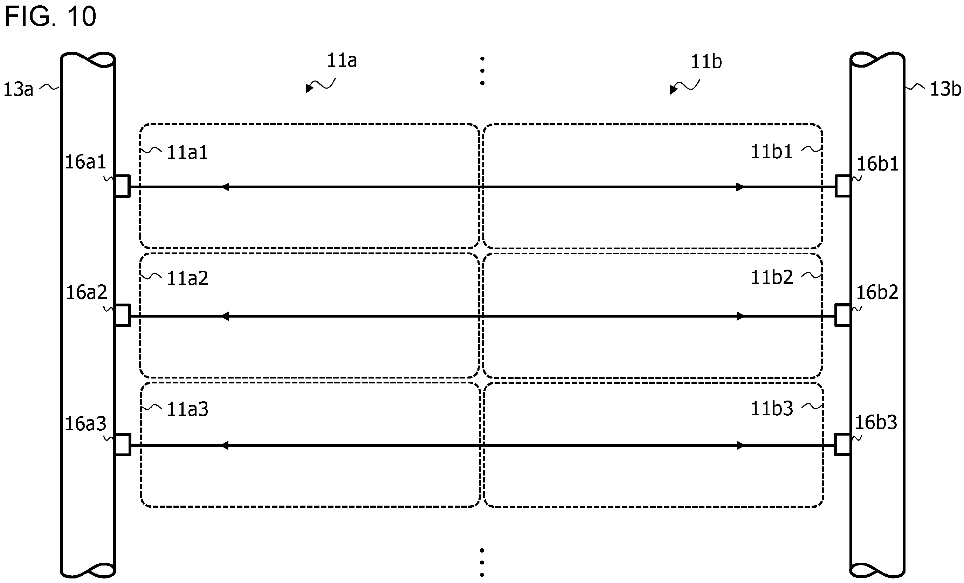

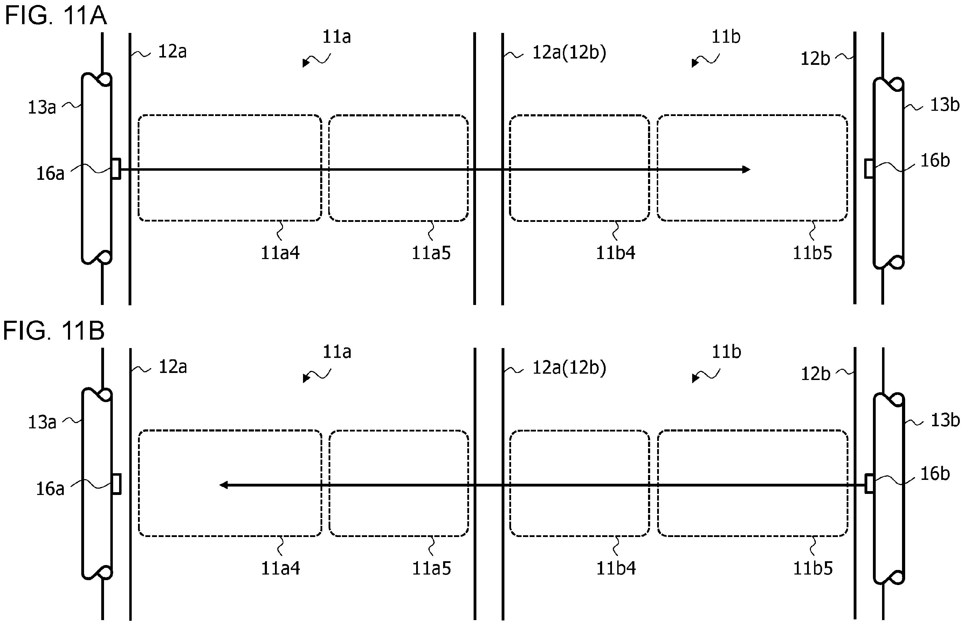

Next, a configuration example of a sprinkling filter system 200 according to a second embodiment will be described. Fig. 9 is a configuration diagram of the sprinkling filter system 200 according to the second embodiment. In addition, Figs. 10 and 11 are top views of the carrier 11 and the sprinkling pipe 13.

As shown in Fig. 9, for example, the sprinkling filter apparatus 10 in the sprinkling filter system 200 includes a carrier 11a which is deposited with and which holds microorganisms (not illustrated), a filling tank 12a which is filled with the carrier 11a, a carrier 11b which is deposited with and which holds microorganisms, and a filling tank 12b which is filled with the carrier 11b.

In addition, as shown in Fig. 9, for example, the sprinkling filter apparatus 10 includes a sprinkling pipe 13a (hereinafter, also referred to as a first sprinkling pipe 13a) which sprinkles the liquid to be treated 1 on the carrier 11b, a support member 14a which supports, from below, the carrier 11a filling the filling tank 12a, a sprinkling pipe 13b (hereinafter, also referred to as a second sprinkling pipe 13b) which sprinkles the liquid to be treated 1 on the carrier 11a, and a support member 14b which supports, from below, the carrier 11b filling the filling tank 12b.

Hereinafter, the carrier 11a and the carrier 11b may also be collectively referred to as the carrier 11, the filling tank 12a and the filling tank 12b may also be collectively referred to as the filling tank 12, and the sprinkling pipe 13a and the sprinkling pipe 13b may also be collectively referred to as the sprinkling pipe 13. In addition, while a case where the filling tank 12a and the filling tank 12b are integrated with each other will be hereinafter described, alternatively, the filling tank 12a and the filling tank 12b may be separately provided. Furthermore, while a case where two sets of the carrier 11, the filling tank 12, the sprinkling pipe 13, the support member 14, and the like are present in the sprinkling filter apparatus 10 will be hereinafter described, alternatively, the sprinkling filter apparatus 10 may include three sets or more of the carrier 11, the filling tank 12, the sprinkling pipe 13, the support member 14, and the like. Moreover, the filling tank 12a and the filling tank 12b may be integrated with each other instead of being separately provided.

Specifically, the liquid to be treated 1 which is stored in the storage tank 20 is supplied to each of the sprinkling pipe 13a and the sprinkling pipe 13b via, for example, a line L1 which couples the storage tank 20 and the sprinkling filter apparatus 10 to each other by a supply apparatus P such as a pump provided on the line L1.

In addition, as shown in Figs. 10 and 11, the sprinkling pipe 13a sprinkles the liquid to be treated 1 in such a manner that, for example, an ejection direction in a horizontal direction equals a direction toward the sprinkling pipe 13b. In other words, for example, the sprinkling pipe 13a is fixed with respect to the filling tank 12a and does not move in the horizontal direction. Therefore, the ejection direction of the liquid to be treated 1 in the sprinkling pipe 13a (the ejection direction due to a sprinkler hole 16a provided in the sprinkling pipe 13a) is fixed in such a manner that, for example, the liquid to be treated 1 is ejected in a direction toward the sprinkling pipe 13b (one direction in the horizontal direction).

In addition, the sprinkling pipe 13b sprinkles the liquid to be treated 1 in such a manner that, for example, an ejection direction in a horizontal direction equals a direction toward the sprinkling pipe 13a. In other words, for example, the sprinkling pipe 13b is fixed with respect to the filling tank 12b and does not move in the horizontal direction. Therefore, the ejection direction of the liquid to be treated 1 in the sprinkling pipe 13b (the ejection direction due to a sprinkler hole 16b provided in the sprinkling pipe 13b) is fixed in such a manner that, for example, the liquid to be treated 1 is ejected in a direction toward the sprinkling pipe 13a (one direction in the horizontal direction).

Furthermore, for example, the sprinkling pipe 13a is provided with a plurality of sprinkler holes 16a along a longitudinal direction of the sprinkling pipe 13a. Specifically, as shown in Fig. 10, for example, the sprinkling pipe 13a is provided with a plurality of sprinkler holes 16a including a sprinkler hole 16a1, a sprinkler hole 16a2, and a sprinkler hole 16a3.

In addition, for example, the sprinkling pipe 13b is provided with a plurality of sprinkler holes 16b along a longitudinal direction of the sprinkling pipe 13b. Specifically, as shown in Fig. 10, for example, the sprinkling pipe 13b is provided with a plurality of sprinkler holes 16b including a sprinkler hole 16b1, a sprinkler hole 16b2, and a sprinkler hole 16b3.

Accordingly, for example, the sprinkling filter apparatus 10 can sprinkle the liquid to be treated 1 on each region that is a sprinkling object even when the length of the width of a region filled with the carrier 11 (the length of the width of the filling tank 12) is longer than the length of the width of a region that is a sprinkling object due to the sprinkler holes 16a or the sprinkler holes 16b.

While each of the plurality of sprinkler holes of the sprinkling pipe 13a and each of the plurality of sprinkler holes of the sprinkling pipe 13b are opposite (face-to-face) in Fig. 10, the pluralities of sprinkler holes need not oppose each other.

In this case, for example, the sprinkling pipe 13a performs sprinkling of the liquid to be treated 1 to a region in a vicinity of the sprinkling pipe 13b (hereinafter, also referred to as a region to the side of the sprinkling pipe 13b). In addition, for example, the sprinkling pipe 13b performs sprinkling of the liquid to be treated 1 to a region in a vicinity of the sprinkling pipe 13a (hereinafter, also referred to as a region to the side of the sprinkling pipe 13a).

In addition, as indicated by a solid arrow in Fig. 10 (a solid arrow from the side of the sprinkling pipe 13a toward the side of the sprinkling pipe 13b), for example, each of the sprinkler hole 16a1, the sprinkler hole 16a2, and the sprinkler hole 16a3 performs sprinkling of the liquid to be treated 1 on each of a region 11b1, a region 11b2, and a region 11b3 which are included in regions filled with the carrier 11b (each of the region 11b1, the region 11b2, and the region 11b3 which are lined up in the longitudinal direction of the sprinkling pipe 13b). Furthermore, as indicated by a solid arrow in Fig. 10 (a solid arrow from the side of the sprinkling pipe 13b toward the side of the sprinkling pipe 13a), for example, each of the sprinkler hole 16b1, the sprinkler hole 16b2, and the sprinkler hole 16b3 performs sprinkling of the liquid to be treated 1 on each of a region 11a1, a region 11a2, and a region 11a3 which are included in filled with the carrier 11a (each of the region 11a1, the region 11a2, and the region 11a3 which are lined up in the longitudinal direction of the sprinkling pipe 13a).

In other words, when performing sprinkling of the liquid to be treated 1 to a region in the vicinity of the sprinkling pipe 13a, the sprinkling pipe 13a must suppress supply pressure (supply amount) of the liquid to be treated 1. Therefore, in this case, the sprinkling pipe 13a is unable to accurately perform sprinkling control of the liquid to be treated 1 with respect to the region in the vicinity of the sprinkling pipe 13a. In a similar manner, when performing sprinkling of the liquid to be treated 1 to a region in the vicinity of the sprinkling pipe 13b, the sprinkling pipe 13b must suppress supply pressure (supply amount) of the liquid to be treated 1. Therefore, in this case, the sprinkling pipe 13b is unable to accurately perform sprinkling control of the liquid to be treated 1 with respect to the region in the vicinity of the sprinkling pipe 13b.

In consideration thereof, in the sprinkling filter system 200 according to the present embodiment, for example, each of the sprinkling pipe 13a and the sprinkling pipe 13b is installed in such a manner that ejection directions of the liquid to be treated 1 oppose each other and each sprinkling pipe performs sprinkling to a region in the vicinity of the other sprinkling pipe.

Accordingly, the sprinkling filter system 200 according to the present embodiment can accurately perform sprinkling control even with respect to regions in the vicinity of each sprinkling pipe. Therefore, the sprinkling filter system 200 can accurately perform sprinkling control of the liquid to be treated 1 with respect to all sprinkling regions.

More specifically, as shown in Fig. 11A, for example, the sprinkling pipe 13a performs sprinkling of the liquid to be treated 1 to a region 11b5 which is a region in the vicinity of the sprinkling pipe 13b (for example, a part of the region 11b1 described with reference to Fig. 10) among regions between the sprinkling pipe 13a and the sprinkling pipe 13b in the horizontal direction. In addition, as shown in Fig. 11B, for example, the sprinkling pipe 13b performs sprinkling of the liquid to be treated 1 to a region 11a4 which is a region in the vicinity of the sprinkling pipe 13a (for example, a part of the region 11a1 described with reference to Fig. 10) among regions between the sprinkling pipe 13a and the sprinkling pipe 13b in the horizontal direction.

Furthermore, for example, the sprinkling pipe 13a also performs sprinkling of the liquid to be treated 1 to a region 11b4 which is a region between the region 11a4 and the region 11b5 (for example, a part of the region 11b1 described with reference to Fig. 10). In addition, for example, the sprinkling pipe 13b also performs sprinkling of the liquid to be treated 1 to a region 11a5 which is a region between the region 11a4 and the region 11b5 (for example, a part of the region 11a1 described with reference to Fig. 10).

The sprinkling of the liquid to be treated 1 to the region 11a5 may be performed by, for example, the sprinkling pipe 13a or both of the sprinkling pipe 13a and the sprinkling pipe 13b. In addition, the sprinkling of the liquid to be treated 1 to the region 11b4 may be performed by, for example, the sprinkling pipe 13b or both of the sprinkling pipe 13a and the sprinkling pipe 13b. A region that is sprinkled by both the sprinkling pipe 13a and the sprinkling pipe 13b is also collectively referred to as an overlapping region.

In addition, the sprinkling pipe 13a and the sprinkling pipe 13b may eject the liquid to be treated 1 in a direction tilted by a predetermined angle from the horizontal direction toward a vertically upward direction.

Let us now return to Fig. 9. For example, the liquid to be treated 1 having passed through the carrier 11a (the liquid to be treated 1 after decomposition and removal of the organic pollutants have been performed) is supplied to a storage tank 15a via a plurality of holes provided in the support member 14a and subsequently discharged via the line L2 to the outside (for example, a facility where a next step is to be performed). In addition, for example, the liquid to be treated 1 having passed through the carrier 11b is supplied to a storage tank 15b via a plurality of holes provided in the support member 14b and subsequently discharged via the line L2 to the outside.

While a case where the filling tank 12a and the storage tank 15a are integrated with each other will be hereinafter described, alternatively, the filling tank 12a and the storage tank 15a may be separately provided. In a similar manner, while a case where the filling tank 12b and the storage tank 15b are integrated with each other will be hereinafter described, alternatively, the filling tank 12b and the storage tank 15b may be separately provided.

Next, sprinkling control will be described. For example, the sprinkling filter system 200 includes the control apparatus 30 which controls sprinkling by the sprinkling pipe 13. For example, the control apparatus 30 is a computer including a processor such as a CPU and a memory. Hereinafter, sprinkling control by the control apparatus 30 will be described.

### [Sprinkling control by control apparatus 30]

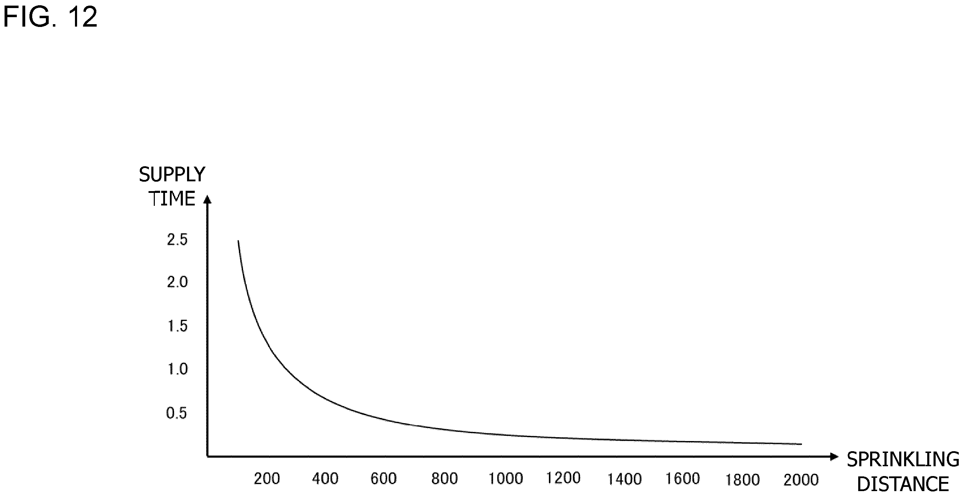

Figs. 12 to 14 are diagrams describing sprinkling control by the control apparatus 30. A reason for sprinkling water to be treated from two sprinkling pipes that oppose each other will be described with reference to Figs. 12 to 14.

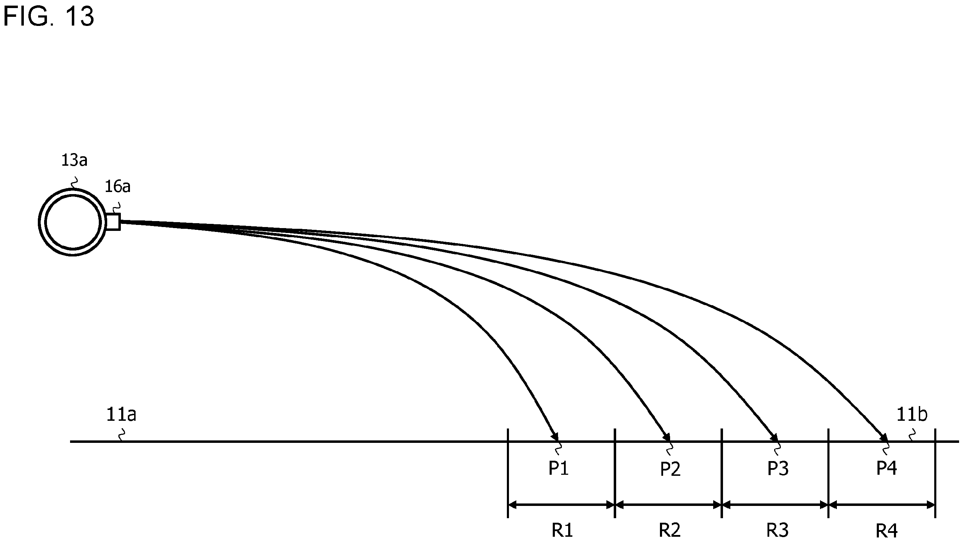

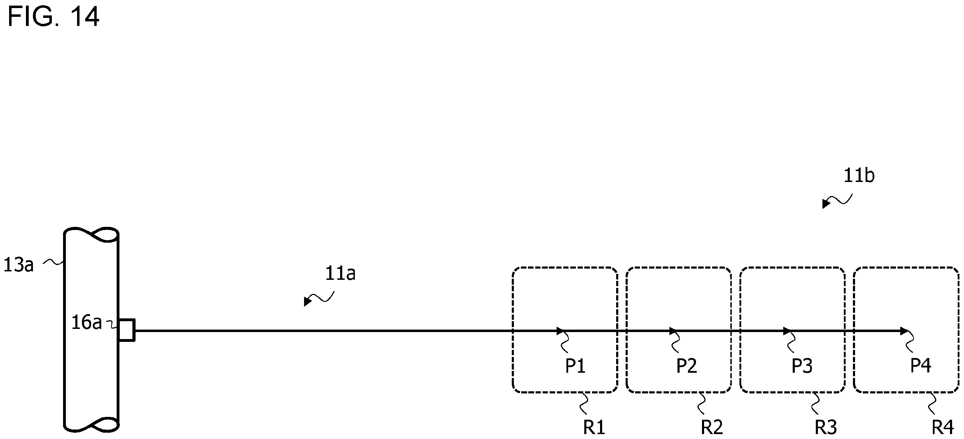

Fig. 12 is a graph showing a relationship between a sprinkling distance in the horizontal direction from the position of the sprinkling pipe 13 to a region that is a sprinkling object and a supply time during which the liquid to be treated 1 is supplied by the supply apparatus P with respect to the sprinkling pipe 13. An axis of abscissa and an axis of ordinate in the graph shown in Fig. 12 respectively represent a sprinkling distance and a supply time. In addition, Fig. 13 is a vertical sectional view showing the carrier 11 and the sprinkling pipe 13 during sprinkling, and Fig. 14 is a top view (plan view) showing the carrier 11 and the sprinkling pipe 13 during sprinkling. The following description will be given on the assumption that the graph shown in Fig. 12 has been defined in advance by a manager.

The graph shown in Fig. 12 indicates that the sprinkling distance and the supply time are inversely proportional to each other when a supply amount of the liquid to be treated 1 is made constant. In other words, it is shown that when the supply amount of the liquid to be treated 1 is constant, the shorter the sprinkling distance, the lower the supply pressure and the longer the supply time, and the longer the sprinkling distance, the higher the supply pressure and the shorter the supply time. Furthermore, the graph shows that when the sprinkling distance is equal to or longer than a predetermined distance (for example, 1000 (cm)), a change in the supply time according to a change amount (hereinafter, simply referred to as a change) of the sprinkling distance decreases. Specifically, for example, the graph shown in Fig. 12 indicates that a change in the "supply time" when the "sprinkling distance" is between "1000 (cm)" and "2000 (cm)" is smaller than a change in the "supply time" when the "sprinkling distance" is between "0 (cm)" and "1000 (cm)".

Therefore, for example, the sprinkling filter system 200 according to the present embodiment suppresses a change in the supply time with respect to each region by using, as much as possible, a region of which the "sprinkling distance" is between "1000 (cm)" and "2000 (cm)" as a region that is a sprinkling object with respect to each of the sprinkling pipe 13a and the sprinkling pipe 13b.

In other words, for example, the sprinkling filter system 200 uses the sprinkling pipe 13a to perform sprinkling to a region of which a proportion of a change in a supply time to a change in a sprinkling distance from a position of the sprinkling pipe 13a (hereinafter, also referred to as a first proportion) satisfies a predetermined condition among regions between the sprinkling pipe 13a and the sprinkling pipe 13b in the horizontal direction. In addition, for example, the sprinkling filter system 200 uses the sprinkling pipe 13b to perform sprinkling to a region of which a proportion of a change in a supply time to a change in a sprinkling distance from a position of the sprinkling pipe 13b (hereinafter, also referred to as a second proportion) satisfies a predetermined condition among regions between the sprinkling pipe 13a and the sprinkling pipe 13b in the horizontal direction.

Specifically, for example, the sprinkling filter system 200 uses the sprinkling pipe 13a to perform sprinkling to a region of which an absolute value of the first proportion is equal to or smaller than a threshold among regions between the sprinkling pipe 13a and the sprinkling pipe 13b in the horizontal direction. In addition, for example, the sprinkling filter system 200 uses the sprinkling pipe 13b to perform sprinkling to a region of which an absolute value of the second proportion is equal to or smaller than a threshold among regions between the sprinkling pipe 13a and the sprinkling pipe 13b in the horizontal direction.

With a sprinkling filter apparatus using a rotating sprinkler arm (a conventional sprinkling filter apparatus), for example, since an amount of the liquid to be treated 1 ejected from each of the plurality of sprinkler holes provided in the sprinkler arm is the same, the greater the distance from a center of rotation of the sprinkler arm, the narrower a sprinkling width of the liquid to be treated 1 which is sprinkled from each sprinkler hole, thereby making it difficult to uniformly perform sprinkling on each region.

By comparison, the sprinkling filter system 200 according to the present embodiment performs sprinkling on each region while fixing the ejection direction of the liquid to be treated 1 in the horizontal direction from the sprinkling pipe 13. Furthermore, the sprinkling filter system 200 determines a region that is a sprinkling object to be sprinkled by each sprinkling pipe 13 in such a manner that changes in a supply time and supply pressure are within predetermined ranges.

Accordingly, the sprinkling filter system 200 according to the present embodiment can suppress a hydrodynamic fluctuation when performing sprinkling on each region and can more uniformly perform sprinkling on each region. In this case, a hydrodynamic fluctuation of water to be treated means a change in at least one of a supply time and supply pressure of the water to be treated when performing sprinkling on each region.

In addition, for example, in the sprinkling filter system 200 according to the present embodiment, a hydrodynamic fluctuation with respect to each region can be reduced by using, as much as possible, a region of which changes in the supply time and supply pressure with respect to each region are small as a region that is a sprinkling object with respect to each of the sprinkling pipe 13a and the sprinkling pipe 13b. By reducing hydrodynamic fluctuation in this manner, in the sprinkling filter system 200 according to the present embodiment, change control of supply pressure of the liquid to be treated 1 with respect to each region in the control apparatus 30 or the supply apparatus P can be readily performed.

Specifically, as shown in Figs. 9 and 11, for example, the sprinkling filter system 200 according to the present embodiment causes respective ejection directions of the liquid to be treated 1 according to the sprinkling pipe 13a and the sprinkling pipe 13b to oppose each other, installs the sprinkling pipe 13a in such a manner that distances (sprinkling distances) from the sprinkling pipe 13a to the region 11b4 and the region 11b5 are included in a range from "1000 (cm)" to "2000 (cm)", and installs the sprinkling pipe 13b so that distances (sprinkling distances) from the sprinkling pipe 13b to the region 11a4 and the region 11a5 are included in a range from "1000 (cm)" to "2000 (cm)".

Accordingly, for example, in the sprinkling filter system 200 according to the present embodiment, sprinkling in a region where a hydrodynamic fluctuation can be suppressed by having the sprinkling pipe 13b perform sprinkling can be performed by the sprinkling pipe 13b, and sprinkling in a region where a hydrodynamic fluctuation can be suppressed by having the sprinkling pipe 13a perform sprinkling can be performed by the sprinkling pipe 13a. Therefore, in the sprinkling filter apparatus 10, in this case, a hydrodynamic fluctuation during sprinkling with respect to each region positioned between the sprinkling pipe 13a and the sprinkling pipe 13b can be suppressed. As a result, in the sprinkling filter system 200, for example, sprinkling with respect to all regions positioned between the sprinkling pipe 13a and the sprinkling pipe 13b can be more uniformly performed as compared to the sprinkling filter system 100 according to the first embodiment (in other words, a sprinkling filter system using only one sprinkling pipe 13).

In addition, for example, the control apparatus 30 controls sprinkling of the liquid to be treated 1 by the sprinkling pipe 13a and the sprinkling pipe 13b in such a manner that sprinkling of the liquid to be treated 1 on all regions that are sprinkling objects is performed as uniformly as possible in a similar manner to the sprinkling filter system 100 according to the first embodiment under a condition that the sprinkling pipe 13a performs sprinkling of the liquid to be treated 1 to the region 11b4 and the region 11b5 and the sprinkling pipe 13b performs sprinkling of the liquid to be treated 1 to the region 11a4 and the region 11a5.

Specifically, the control apparatus 30 exercises control in such a manner that, for example, the longer the sprinkling distance of a region, the higher the supply pressure of the liquid to be treated 1 from the supply apparatus P with respect to the sprinkling pipe 13.

### [Specific example of sprinkling control by control apparatus 30]

Next, a specific example of sprinkling control from the sprinkling pipe 13a with respect to a region that is a sprinkling object (sprinkling control by the control apparatus 30) will be described. Hereinafter, as shown in Figs. 13 and 14, a case where each of a region R1, a region R2, a region R3, and a region R4 which are mutually adjacent regions is included in regions that are sprinkling objects of the sprinkling pipe 13a will be described. In addition, as shown in Figs. 13 and 14, a case where sprinkling distances corresponding to the region R1, the region R2, the region R3, and the region R4 are longer in this order will be described. Note that a description of a specific example of sprinkling control with respect to regions that are sprinkling objects from the sprinkling pipe 13b will be omitted.

In this case, in a similar manner to the case of the first embodiment, for example, the control apparatus 30 refers to the graph shown in Fig. 3 and sequentially performs sprinkling of the liquid to be treated 1 on each of the region R1, the region R2, the region R3, and the region R4. Specifically, for example, the control apparatus 30 sequentially performs sprinkling of the liquid to be treated 1 on each of a point P1 included in the region R1, a point P2 included in the region R2, a point P3 included in the region R3, and a point P4 included in the region R4.

Accordingly, for example, the control apparatus 30 can uniformly perform sprinkling of the liquid to be treated 1 on all regions to be sprinkled by the sprinkling pipe 13a.

In addition, for example, when sprinkling with respect to the region R4 is completed, for example, the control apparatus 30 repetitively performs sprinkling with respect to the region R1, the region R2, the region R3, and the region R4. Specifically, for example, the control apparatus 30 repetitively performs control of performing sprinkling in the order of the region R1, the region R2, the region R3, and the region R4. Alternatively, for example, the control apparatus 30 repetitively performs control of performing sprinkling in the order of the region R1, the region R2, the region R3, and the region R4 and subsequently performing sprinkling in an order (reverse order) of the region R4, the region R3, the region R2, and the region R1.

### REFERENCE SIGNS LIST

1: LIQUID TO BE TREATED
10: SPRINKLING FILTER APPARATUS
11: CARRIER, 11a: CARRIER
11a1: REGION, 11a2: REGION
11a3: REGION, 11a4: REGION
11a5: REGION, 11b: CARRIER
11b1: REGION, 11b2: REGION
11b3: REGION, 11b4: REGION
11b5: REGION, 12: FILLING TANK
12a: FILLING TANK, 12b: FILLING TANK
13: SPRINKLING PIPE, 13a: SPRINKLING PIPE
13b: SPRINKLING PIPE, 14a: SUPPORT MEMBER
14: SUPPORT MEMBER, 14b: SUPPORT MEMBER
15: STORAGE TANK, 15a: STORAGE TANK
15b: STORAGE TANK, 16: SPRINKLER HOLE
16a: SPRINKLER HOLE, 16a1: SPRINKLER HOLE
16a2: SPRINKLER HOLE, 16a3: SPRINKLER HOLE
16b: SPRINKLER HOLE, 16b1: SPRINKLER HOLE
16b2: SPRINKLER HOLE, 16b3: SPRINKLER HOLE
20: STORAGE TANK, 30: CONTROL APPARATUS
100: SPRINKLING FILTER SYSTEM
111: REGION, 112: REGION
113: REGION, 161: SPRINKLER HOLE
162: SPRINKLER HOLE, 163: SPRINKLER HOLE
200: SPRINKLING FILTER SYSTEM
M: MANOMETER, L1: LINE
L2: LINE, P: SUPPLY APPARATUS

## Claims

1. A sprinkling filter apparatus, comprising:
a tank which is filled with a carrier performing a biological treatment with respect to a liquid to be treated;
a first sprinkling pipe which is fixed to the tank and which sprinkles the liquid to be treated to the tank;
a supply apparatus which supplies the liquid to be treated to the first sprinkling pipe; and
a control apparatus which controls the supply of the liquid to be treated from the supply apparatus to the first sprinkling pipe.

2. The sprinkling filter apparatus according to claim 1, further comprising:
a second sprinkling pipe which is fixed to the tank and which sprinkles the liquid to be treated to the tank, wherein
the first sprinkling pipe and the second sprinkling pipe are respectively provided at positions where ejection directions of the liquid to be treated in a horizontal direction oppose each other,
the first sprinkling pipe sprinkles the liquid to be treated to a region on a side of the second sprinkling pipe among a plurality of regions between the first sprinkling pipe and the second sprinkling pipe in the horizontal direction,
the second sprinkling pipe sprinkles the liquid to be treated to a region on a side of the first sprinkling pipe, among the plurality of regions,
the first sprinkling pipe does not sprinkle the liquid to be treated to the region on the side of the first sprinkling pipe, and
the second sprinkling pipe does not sprinkle the liquid to be treated to the region on the side of the second sprinkling pipe.

3. The sprinkling filter apparatus according to claim 2, wherein
the first sprinkling pipe sprinkles the liquid to be treated to an overlapping region between the region on the side of the first sprinkling pipe and the region on the side of the second sprinkling pipe, and the region on the side of the second sprinkling pipe, among the plurality of regions, and
the second sprinkling pipe sprinkles the liquid to be treated to the overlapping region and the region on the side of the first sprinkling pipe, among the plurality of regions.

4. The sprinkling filter apparatus according to claim 2, wherein
a supply time of the liquid to be treated with respect to each of the plurality of regions is a time required to supply a predetermined amount of the liquid to be treated to each region in a case where supply of the liquid to be treated is performed at supply pressure which enables the liquid to be treated to reach each region,
the first sprinkling pipe sprinkles the liquid to be treated, with a region, of which a first proportion of a change in the supply time to a change in a distance from a position of the first sprinkling pipe satisfies a predetermined condition among regions between the first sprinkling pipe and the second sprinkling pipe in the horizontal direction, being the region on the side of the first sprinkling pipe, and
the second sprinkling pipe sprinkles the liquid to be treated, with a region, of which a second proportion of a change in the supply time to a change in a distance from a position of the second sprinkling pipe satisfies the predetermined condition among regions between the first sprinkling pipe and the second sprinkling pipe in the horizontal direction, being the region on the side of the second sprinkling pipe.

5. The sprinkling filter apparatus according to claim 4, wherein
the first sprinkling pipe sprinkles the liquid to be treated, with a region, of which an absolute value of the first proportion is equal to or smaller than a threshold, being the region on the side of the first sprinkling pipe, and
the second sprinkling pipe sprinkles the liquid to be treated, with a region, of which an absolute value of the second proportion is equal to or smaller than the threshold, being the region on the side of the second sprinkling pipe.

6. The sprinkling filter apparatus according to claim 1, wherein the control apparatus controls the supply of the liquid to be treated from the supply apparatus to the first sprinkling pipe by controlling at least any of supply pressure of the liquid to be treated to be supplied by the supply apparatus to the first sprinkling pipe and a supply amount of the liquid to be treated to be supplied by the supply apparatus to the first sprinkling pipe.

7. The sprinkling filter apparatus according to claim 6, wherein the control apparatus controls the supply of the liquid to be treated from the supply apparatus to the first sprinkling pipe in such a manner that a relationship between an elapsed time from a start of supply of the liquid to be treated from the supply apparatus to the first sprinkling pipe and the supply pressure of the liquid to be treated to be supplied by the supply apparatus to the first sprinkling pipe or the supply amount of the liquid to be treated to be supplied by the supply apparatus to the first sprinkling pipe conforms to a predetermined formula.

8. The sprinkling filter apparatus according to claim 1, wherein the control apparatus sets a supply time during which the liquid to be treated is supplied by the supply apparatus to the first sprinkling pipe in such a manner that the longer a distance in the horizontal direction from the position of the first sprinkling pipe to a region, where sprinkling of the liquid to be treated is to be performed, the shorter the supply time.
